# EUROPÄISCHE PATENTANMELDUNG

(11) **EP 4 151 511 A1**
(43) Veröffentlichungstag der Anmeldung: **22.03.2023**
(21) Anmeldenummer: 22195388.8
(22) Anmeldetag: 13.09.2022
(51) Int. Cl.: B62K 21/10

(54) **VORRICHTUNG ZUM BEREITSTELLEN EINES LENKMOMENTS FÜR EINEN ZWEIRADLENKUNGSMECHANISMUS**

(30) Priorität: 15.09.2021 DE 102021123921
(71) Anmelder: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB

(57) **Zusammenfassung**

Die Erfindung beschreibt eine Vorrichtung (100) zum Bereitstellen eines Lenkmoments, für einen Zweiradlenkungsmechanismus (70) mit einer Lagerungseinrichtung (10) zum Lagern der Vorrichtung (100) an einem Zweiradrahmen (2), einer Kopplungseinrichtung (60) zum Koppeln der Vorrichtung (100) mit dem Zweiradlenkungsmechanismus (70) und einer Aktoreinrichtung (80) zum Bewirken einer über die Kopplungseinrichtung (60) auf den Zweiradlenkungsmechanismus (70) übertragbaren Lenkkraft, insbesondere einer Rückstellkraft, wobei die Aktoreinrichtung (80) eine Steuerungsschnittstelle (82) zum Ansteuern der Aktoreinrichtung (80) durch eine Lenkungssteuerungseinrichtung (90) aufweist.

## Beschreibung

### Technisches Gebiet

Die vorliegende Erfindung bezieht sich auf eine Vorrichtung zum Bereitstellen eines Lenkmoments für einen Zweiradlenkungsmechanismus. Die vorliegende Erfindung bezieht sich zudem auf einen Zweiradrahmen, eine Zweiradlenkung und ein Zweirad.

### Stand der Technik

Das Laufverhalten eines Zweirads kann bei geringen Fahrgeschwindigkeiten instabil sein. Bei einer geringen Laufstabilität kann das Vorderrad des Zweirads dazu neigen zur Seite zu kippen. Ein kippendes Vorderrad und ein dadurch seitlich ausschlagender Lenker kann zu gefährlichen Fahrsituationen führen.

Auch bei angehobenem Vorderrad des Zweirads kann das Vorderrad zur Seite kippen und der Lenker seitlich ausschlagen. Beispielsweise ein Abstellen oder Anheben des Zweirads oder ein Transportieren des Zweirads kann so beeinträchtigt sein oder zu Schäden in der Umgebung des Zweirads führen.

### Darstellung der Erfindung

Die vorliegende Erfindung betriff in einem Aspekt eine Vorrichtung zum Bereitstellen eines Lenkmoments für einen Zweiradlenkungsmechanismus. Bei dem Lenkmoment kann es sich um ein Rückstellmoment handeln. Die Vorrichtung kann eingerichtet sein, um das Lenkmoment in Abhängigkeit eines Lenkwinkels bereitzustellen. Bei dem Lenkmoment kann es sich um ein variables Lenkmoment handeln. Bei dem Zweiradlenkungsmechanismus kann es sich beispielsweise um einen Fahrradlenkungsmechanismus oder um einen Motorradlenkungsmechanismus handeln.

Der Zweiradlenkungsmechanismus kann einen Gabelschaft aufweisen. Bei dem Rückstellmoment kann es sich um ein Rückstellmoment zum Rückstellen eines Gabelschafts oder eines an diesem angeordneten Zweiradlenkers handeln, welcher ein Fahrradlenker oder ein Motorradlenker sein kann. Das Rückstellmoment kann daher ein Gabelschaftrückstellmoment oder Lenkerrückstellmoment sein oder das Gabelschaftrückstellmoment oder das Lenkerrückstellmoment bewirken. Der Lenkwinkel kann auf einem Einschlagwinkel eines Zweiradlenkers des Zweiradlenkungsmechanismus basieren.

Bei der Vorrichtung kann es sich um eine Zweiradkomponente handeln, welche an einem Zweirad beziehungsweise an einem Zweiradrahmen und/oder einem Zweiradlenkungsmechanismus nachrüstbar sein kann. Die Vorrichtung kann hierfür an einem Zweiradrahmen lagerbar und mit dem Zweiradlenkungsmechanismus koppelbar sein. Bei der Zweiradkomponente kann es sich um eine Fahrradkomponente und/oder um eine Motorradkomponente handeln.

Das Rückstellmoment kann ein Rückstellen des Zweiradlenkungsmechanismus in eine Neutralstellung der Vorrichtung bewirken. Bei der Neutralstellung kann es sich um einen Zustand der Vorrichtung handeln, welcher ein Geradeausfahren des Zweirads herbeiführen kann. Bei der Neutralstellung kann es sich auch um einen Zustand der Vorrichtung handeln, in welchem sich die Vorrichtung ohne äußere Lenkkrafteinwirkung in einem Momentengleichgewicht beziehungsweise in einem Kraftgleichgewicht befinden kann.

Die Vorrichtung kann eine Lagerungseinrichtung zum Lagern der Vorrichtung an einem Zweiradrahmen aufweisen. Die Lagerungseinrichtung kann an dem Zweiradrahmen anbringbar sein. Die Lagerungseinrichtung kann zum festen Lagern der Vorrichtung an dem Zweiradrahmen eingerichtet sein.

Die Vorrichtung kann eine Kopplungseinrichtung zum Koppeln der Vorrichtung mit dem Zweiradlenkungsmechanismus aufweisen. Das Koppeln kann ein drehfestes Koppeln sein. Die Kopplungseinrichtung kann zum drehfesten Koppeln der Vorrichtung mit dem Gabelschaft eingerichtet sein. Die Kopplungseinrichtung kann zum kraftschlüssigen und/oder formschlüssigen Koppeln der Vorrichtung mit dem Gabelschaft eingerichtet sein. Der Lenkwinkel kann daher einem Drehwinkel des Gabelschafts entsprechen. Der Zweiradlenker kann mit dem Gabelschaft über einen Lenkervorbau drehfest verbunden sein. Der Lenkwinkel kann daher auch einem Einschlagwinkel des Zweiradlenkers entsprechen.

Die Vorrichtung kann eine Aktoreinrichtung zum Bewirken einer über die Kopplungseinrichtung auf den Zweiradlenkungsmechanismus übertragbaren Lenkkraft aufweisen. Bei der übertragbaren Lenkkraft kann es sich um eine übertragbare Zusatzlenkkraft handeln, welche eine bereits im Lenkungsmechanismus bereitgestellte Lenkkraft überlagern kann. Bei der bereits bereitgestellten Lenkkraft kann es sich um eine von einem Zweiradfahrer manuell bereitgestellte und in den Lenkungsmechanismus eingebrachte Lenkkraft handeln. Handelt es sich bei der übertragbaren Lenkkraft um eine Rückstellkraft kann diese der bereits bereitgestellten Lenkkraft entgegenwirken beziehungsweise diese teilweise kompensieren.

Die Lenkkraft kann auf den Gabelschaft übertragbar sein. Bei der Lenkkraft kann es sich um eine Rückstellkraft handeln. Bei der Rückstellkraft kann es sich um eine Rückstellkraft zum Rückstellen des Gabelschafts oder des an diesem angeordneten Zweiradlenkers handeln. Die Rückstellkraft kann daher eine Gabelschaftrückstellkraft oder eine Lenkerrückstellkraft sein oder die Gabelschaftrückstellkraft oder die Lenkerrückstellkraft bewirken. Die Aktoreinrichtung kann eine Steuerungsschnittstelle zum Ansteuern der Aktoreinrichtung durch eine Lenkungssteuerungseinrichtung aufweisen. Die Vorrichtung kann die Lenkungssteuerungseinrichtung aufweisen.

Die Aktoreinrichtung kann einen Aktor zum Erzeugen einer mechanischen Bewegung beziehungsweise einer Kraft aufweisen, welche die Lenkkraft bewirkt. Der Aktor kann einen entsprechenden Antrieb aufweisen. Bei dem Aktor kann es sich grundsätzlich um jeden Aktor zum Erzeugen der mechanischen Bewegung beziehungsweise der Kraft handeln. Gemäß einer Ausführungsform der Vorrichtung kann es sich bei dem Aktor um einen mechanischen Aktor, beispielsweise einen elektromechanischen Aktor, handeln. Gemäß einer weiteren Ausführungsform kann es sich bei dem Aktor um einen elektromechanischen Aktor handeln. Gemäß noch einer weiteren Ausführungsform kann es sich bei dem Aktor um einen hydraulischen Aktor handeln. Der Aktor kann ein entsprechendes Antriebselement aufweisen, welches ein Steuersignal der Lenkungssteuerungseinrichtung in die mechanische Bewegung beziehungsweise die Kraft transformiert. Bei dem Antriebselement kann es sich um ein mechanisches Antriebselement, beispielsweise ein elektromechanisches Antriebselement, ein elektromechanisches Antriebselement und/oder ein hydraulisches Antriebselement handeln. Die Aktoreinrichtung beziehungsweise der Aktor kann somit aktiv in den Zweiradlenkungsmechanismus eingreifen, um die Lenkkraft bewirken und/oder das Lenkmoment bereitzustellen. Die Aktoreinrichtung beziehungsweise der Aktor kann indirekt oder direkt auf den Zweiradlenkungsmechanismus einwirken, um die Lenkkraft zu bewirken und/oder das Lenkmoment bereitzustellen.

Der Aktor kann ein Übertragungselement zum Übertragen der erzeugten Bewegung auf die Kopplungseinrichtung aufweisen. Bei dem Übertragungselement kann es sich um ein Kraftübertragungselement zum Übertragen einer vom dem Aktor erzeugten Kraft aufweisen, wobei das Kraftübertragungselement die erzeugte Kraft zum Bewirken der Lenkkraft übertragen kann.

Mit der erfindungsgemäßen Vorrichtung kann in vorteilhafter Weise ein Einstellen eines Lenkmoments für einen Zweiradlenkungsmechanismus verbessert werden. Mit der Erfindung kann als vorteilhafter Effekt ein verbessertes Fahrverhalten eines Zweirads erzielt werden. Insbesondere kann das Laufverhalten des Zweirads mit der Erfindung stabiler sein. Im Weiteren kann mit der Erfindung auch eine verbesserte Handhabung eines Fahrrads erzielt werden. Insbesondere kann ein Ausschlagen eines angehobenen Vorderrads vermieden werden. Ein weiterer besonders vorteilhafter Effekt der Erfindung liegt darin, dass durch das verbesserte Fahrverhalten und die erhöhte Laufstabilität des Zweirads mit der erfindungsgemäßen Vorrichtung ein vergrößerter Spielraum bei der Auslegung der Lenkgeometrieparameter eines Zweirads erreicht wird. Die Lenkgeometrieparameter eines Zweirads können somit durch die Erfindung in einem größeren Parameterbereich verändert werden, ohne damit die Laufstabilität des Zweirads zu gefährden. Beispielsweise besteht somit mit der Erfindung ein größerer Spielraum bei Anpassungen beziehungsweise Änderungen des Steuerkopfwinkels, des Vorderraddurchmessers, der Gabelbiegung oder des Nachlaufs bei einer Vorderradlenkung.

Gemäß einer weiteren Ausführungsform der Vorrichtung kann die Aktoreinrichtung eingerichtet sein, um in einer Neutralstellung der Vorrichtung Energie auf die Kopplungseinrichtung zu übertragen, mit welcher in der Neutralstellung eine Stabilisierungskraft zum Stabilisieren des Zweiradlenkungsmechanismus bewirkbar sein kann. Die auf die Kopplungseinrichtung übertragbare Energie kann durch den Aktor auf die Kopplungseinrichtung übertragen werden. Bei der Stabilisierungskraft kann es sich um eine in der Vorrichtung wirkende Kraft, beispielsweise eine Zugkraft oder eine Druckkraft, handeln, wobei das Übertragungselement in der Neutralstellung auf Zug oder Druck beansprucht sein kann. Die Stabilisierungskraft kann einem Auslenken des Lenkungsmechanismus entgegenwirken. Somit kann die Vorrichtung bereits in der Neutralstellung die Laufstabilität und die Handhabbarkeit eines Zweirads erhöhen.

Gemäß einer weiteren Ausführungsform der Vorrichtung kann die Aktoreinrichtung eingerichtet ist, um über einen sich aus einer Neutralstellung der Vorrichtung einstellenden Lenkwinkelverlauf Energie auf die Kopplungseinrichtung zu übertragen, mit welcher über den sich einstellenden Lenkwinkelverlauf eine variable Lenkkraft bewirkbar ist. Die variable Lenkkraft kann über den Lenkwinkelverlauf kontinuierlich bewirkbar sein. Die Aktoreinrichtung kann eingerichtet sein, um über den sich aus der Neutralstellung der Vorrichtung einstellenden Lenkwinkelverlauf kontinuierlich Energie auf die Kopplungseinrichtung zu übertragen. Somit kann die Vorrichtung bei einem sich einstellenden Lenkwinkel die Laufstabilität und die Handhabbarkeit eines Zweirads zuverlässig erhöhen.

Gemäß einer weiteren Ausführungsform der Vorrichtung kann die Lenkungssteuerungseinrichtung eine Sensorschnittstelle zum Einlesen von sensorisch erfasster Information zu einer Lenkungsgröße aufweisen, wobei die Lenkungssteuerungseinrichtung eingerichtet sein kann, um die Aktoreinrichtung derart anzusteuern, dass die Lenkkraft in Abhängigkeit der eingelesenen Information bewirkt wird. Die Information kann mit einem Lenkungssensor erfasst werden. Die Information kann auch auf Messdaten des Lenkungssensors basieren. Die Information zu der Lenkungsgröße kann einen Lenkwinkel, einen Lenkwinkelbereich, einen Lenkwinkelverlauf, eine Lenkgeschwindigkeit oder eine Lenkrichtung aufweisen. Die Lenkkraft kann so in Abhängigkeit eines aktuellen in dem Lenkungsmechanismus vorhandenen Lenkwinkels bewirkt werden.

Gemäß einer weiteren Ausführungsform der Vorrichtung kann die Lenkungssteuerungseinrichtung eine Fahrdynamikschnittstelle zum Einlesen von Information zu einer Zweiradfahrdynamikgröße aufweist, wobei die Lenkungssteuerungseinrichtung eingerichtet sein kann, um die Aktoreinrichtung derart anzusteuern, dass die Lenkkraft in Abhängigkeit der eingelesenen Information bewirkt wird. Die Information kann mit einem Fahrdynamiksensor erfasst werden. Die Information kann auch auf Messdaten des Fahrdynamiksensors basieren. Die Information zu der Zweiradfahrdynamikgröße kann eine Längsdynamikinformation, beispielsweise eine Fahrtgeschwindigkeit oder eine Zweiradlängsneigung, oder eine Querdynamikinformation, beispielsweise eine Zweiradquerneigung, aufweisen. Die Lenkkraft kann so in Abhängigkeit der aktuellen Fahrdynamik bewirkt werden.

Gemäß einer weiteren Ausführungsform der Vorrichtung kann die Lenkungssteuerungseinrichtung eingerichtet sein, um die Aktoreinrichtung derart anzusteuern, dass ein über die Kopplungseinrichtung auf den Zweiradlenkungsmechanismus übertragbarer Lenkkraftverlauf bewirkt wird, welcher bei einem sich in einem vorbestimmten Lenkwinkelbereich einstellenden Lenkwinkelverlauf ein variables Lenkmoment, insbesondere ein variables Rückstellmoment, bereitstellt. Die Lenkungssteuerungseinrichtung kann eingerichtet sein, um den Aktor derart anzusteuern, dass der Lenkkraftverlauf durch die mechanische Bewegung des Aktors bewirkt wird. Die Lenkungssteuerungseinrichtung kann die Aktoreinrichtung basierend auf einem sich einstellenden Lenkwinkel ansteuern. Der Lenkwinkel kann durch einen von einem Zweiradfahrer bereitgestellten Lenkkraft herbeigeführt werden.

Gemäß einer weiteren Ausführungsform der Vorrichtung kann die Lenkungssteuerungseinrichtung eingerichtet sein, um die Aktoreinrichtung derart anzusteuern, dass ein über die Kopplungseinrichtung auf den Zweiradlenkungsmechanismus übertragbarer Lenkkraftverlauf bewirkt wird, welcher bei einem sich aus einer Neutralstellung der Vorrichtung in einem vorbestimmten Lenkwinkelbereich einstellenden Lenkwinkelverlauf einen progressiven Aufbau des Lenkmoments bereitstellt. Der progressive Aufbau des Lenkmoments kann in einem weiteren Lenkwinkelbereich, welcher an den vorbestimmten Lenkwinkelbereich angrenzt, in einen proportionalen oder degressiven Aufbau des Lenkmoments übergehen. Der progressive Aufbau kann ein unmittelbare Ansprechverhalten der Vorrichtung bei dem sich aus der Neutralstellung in einem vorbestimmten Lenkwinkelbereich aufbauenden Lenkmoment verbessern.

Gemäß einer weiteren Ausführungsform der Vorrichtung kann die Lenkungssteuerungseinrichtung eingerichtet ist, um die Aktoreinrichtung derart anzusteuern, dass ein über die Kopplungseinrichtung auf den Zweiradlenkungsmechanismus übertragbarer Lenkkraftverlauf bewirkt wird, welcher bei einem sich in einem vorbestimmten Lenkwinkelbereich einstellenden Lenkwinkelverlauf einen degressiven Aufbau des Lenkmoments bereitstellt. Gemäß einer weiteren Ausführungsform der Vorrichtung kann ein sich aus der Neutralstellung in dem vorbestimmten Lenkwinkelbereich einstellender Lenkwinkel in dem Lenkwinkelverlauf des progressiven Aufbaus des Rückstellmoments kleiner sein als ein sich in dem vorbestimmten Lenkwinkelbereich einstellender Lenkwinkel in dem Lenkwinkelverlauf des degressiven Aufbaus des Rückstellmoments.

Gemäß einer weiteren Ausführungsform der Vorrichtung kann die Aktoreinrichtung zwei Aktorelemente zum Bewirken der Lenkkraft aufweist, wobei eines der beiden Aktorelemente zum Bewirken der Lenkkraft bei einem Lenken nach rechts und das weitere der beiden Aktorelemente zum Bewirken der Lenkkraft bei einem Lenken nach links ausgebildet ist. Mindestens eines der Aktorelemente kann wie der beschriebene Aktor ausgebildet sein.

Gemäß einer weiteren Ausführungsform der Vorrichtung kann die Aktoreinrichtung aktivierbar und deaktivierbar sein. Die Aktoreinrichtung kann von einem Zweiradfahrer manuell über ein Aktivierungselement aktiviert und deaktiviert werden. Alternativ oder zusätzlich kann die Lenkungssteuerungseinrichtung über die Steuerungsschnittstelle aktiviert und deaktiviert werden. Die Aktoreinrichtung kann basierend auf der eingelesenen Information zu der Lenkungsgröße und/oder der eingelesenen Information zu der Zweiradfahrdynamikgröße aktiviert und deaktiviert werden.

Gemäß einer weiteren Ausführungsform der Vorrichtung kann die Aktoreinrichtung einstellbar sein. Die Aktoreinrichtung kann basierend auf einem Fahrverhalten sich selbst einstellend sein. Alternativ oder zusätzlich kann die Lenkungssteuerungseinrichtung über die Steuerungsschnittstelle eingestellt werden. Die Aktoreinrichtung kann basierend auf der eingelesenen Information zu der Lenkungsgröße und/oder der eingelesenen Information zu der Zweiradfahrdynamikgröße eingestellt werden. Gemäß einer weiteren Ausführungsform der Vorrichtung kann in der Lenkungssteuerungseinrichtung ein auf dem Lenkwinkel basierendes Lenkkraftkennfeld hinterlegt sein. Bei dem Lenkkraftkennfeld kann es sich um ein zweiradspezifisches und/oder zweiradfahrerspezifisches Lenkkraftkennfeld handeln. Die Lenkungssteuerungseinrichtung kann eingerichtet sein, um die Aktoreinrichtung derart anzusteuern, dass die Lenkkraft basierend auf dem hinterlegten Lenkkraftkennfeld bewirkt wird.

Gemäß einer weiteren Ausführungsform der Vorrichtung kann die Aktoreinrichtung eine Energiespeichereinrichtung zum Speichern von Energie zum Bewirken der Lenkkraft aufweisen. Die Energiespeichereinrichtung kann zum Betätigen des Aktors eingerichtet, wobei die Energiespeichereinrichtung den Aktor zum Bewirken der Lenkkraft mit Energie versorgen kann und hierfür mit diesem energetisch wirkverbunden sein kann. Gemäß einer weiteren Ausführungsform der Vorrichtung kann die Energiespeichereinrichtung mit einem rekuperativen Zweiradsystem zum Einspeisen von Energie in die Energiespeichereinrichtung energetisch wirkverbunden sein. Alternativ oder zusätzlich kann die Energiespeichereinrichtung mit einem Energiespeicher, beispielsweise einem Akkumulator, energetisch wirkverbunden sein.

Die vorliegende Erfindung betriff in einem weiteren Aspekt einen Zweiradrahmen, an welchem die Vorrichtung nach dem vorhergehenden Aspekt gelagert ist. Bei dem Zweiradrahmen kann es sich um einen Fahrradrahmen oder um einen Motorradrahmen handeln. Die Vorrichtung kann an mindestens einem Rahmenrohr des Zweiradrahmens, beispielsweise an einem Rahmenoberrohr und/oder einem Rahmenunterrohr des Zweiradrahmens, gelagert sein. Gemäß einer Ausführungsform des Zweiradrahmens kann die Vorrichtung in mindestens einer Rahmenkomponente des Zweiradrahmens integriert angeordnet sein.

Die vorliegende Erfindung betriff in einem weiteren Aspekt einen Zweiradlenkungsmechanismus, mit welchem eine Vorrichtung nach dem entsprechenden vorhergehenden Aspekt gekoppelt ist. Bei dem Zweiradlenkungsmechanismus kann es sich um einen Fahrradlenkungsmechanismus oder einen Motorradlenkungsmechanismus handeln.

Die vorliegende Erfindung betriff in einem weiteren Aspekt ein Zweirad, welches einen Zweiradrahmen nach dem entsprechenden vorhergehenden Aspekt oder einen Zweiradlenkungsmechanismus nach dem entsprechenden vorhergehenden Aspekt aufweist. Bei dem Zweirad kann es sich um ein Fahrrad oder ein Motorrad handeln.

Bei der vorliegenden Erfindung können Ausführungsformen und Merkmale eines der beschriebenen Aspekte entsprechende Ausführungsformen und Merkmale eines weiteren der beschriebenen Aspekte bilden.

### Kurze Beschreibung der Figuren

- Figur 1: zeigt schematisch eine Vorrichtung zum Bereitstellen eines Lenkmoments, einen Zweiradrahmen und einen Zweiradlenkungsmechanismus gemäß jeweiliger Ausführungsformen der Erfindung.
- Figur 2: zeigt schematisch ein Zweirad mit der Vorrichtung aus Figur 1 gemäß einer Ausführungsform der Erfindung.

### Detaillierte Beschreibung von Ausführungsformen

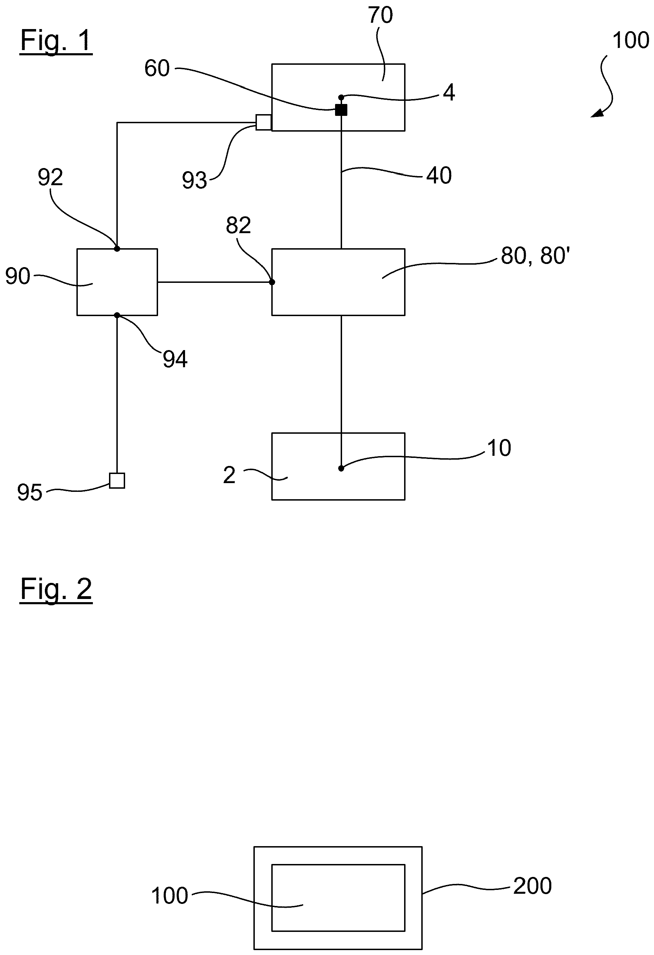

Figur 1 zeigt eine Vorrichtung 100, welche eingerichtet ist, um ein Lenkmoment für einen Zweiradlenkungsmechanismus 70 bereitzustellen. Die Vorrichtung 100 ist über einen Gabelschaft 4 des Zweiradlenkungsmechanismus 70 mit dem Zweiradlenkungsmechanismus 70 derart wirkverbunden, dass die Vorrichtung 100 das bereitgestellte Lenkmoment auf den Zweiradlenkungsmechanismus 70 überträgt. Gemäß einer Ausführungsform weist der Zweiradlenkungsmechanismus 70 die Vorrichtung 100 auf. Die Vorrichtung 100 ist über eine Lagerungseinrichtung 10 an einem Zweiradrahmen 2 eines in Figur 2 gezeigten Zweirads 200 gelagert. Gemäß jeweiliger Ausführungsformen kann der Zweiradrahmen 2 und das Zweirad 200 die Vorrichtung 100 aufweisen.

Die Vorrichtung 100 weist eine Kopplungseinrichtung 60 auf, mit welcher die Vorrichtung 100 mit dem Zweiradlenkungsmechanismus 70 gekoppelt ist. Die Vorrichtung 100 ist derart gekoppelt, dass das eine von der Vorrichtung 100 erzeugte Lenkkraft auf den Gabelschaft 4 des Zweiradlenkungsmechanismus 70 übertragen werden kann, um das Lenkmoment bereitzustellen.

Die Vorrichtung 100 weist zudem eine Aktoreinrichtung 80 auf, mit welcher die Lenkkraft bewirkt werden kann. Die Aktoreinrichtung 80 hat eine Steuerungsschnittstelle 82 über welche die Aktoreinrichtung 80 durch eine Lenkungssteuerungseinrichtung 90 angesteuert werden kann. Die Aktoreinrichtung 80 ist über ein Kraftübertragungselement 40 mit der Kopplungseinrichtung 60 verbunden, um eine von mindestens einem Aktorelement 80' erzeugte Kraft auf die Kopplungseinrichtung 60 zum Bewirken der Lenkkraft zu übertragen.

Die Lenkungssteuerungseinrichtung 90 weist eine Sensorschnittstelle 92 auf, über welche Messdaten eines Lenkungssensor 93 in die Lenkungssteuerungseinrichtung 90 eingelesen werden können. Die Lenkungssteuerungseinrichtung 90 ist eingerichtet, die Aktoreinrichtung 80 basierend auf den eingelesenen Messdaten anzusteuern. Gemäß einer Ausführungsform weisen die Messdaten Informationen zu einem aktuellen Lenkwinkel des Lenkungsmechanismus 70 auf, wobei der Lenkungssensor 93 den Lenkwinkel an dem Lenkungsmechanismus 70 erfasst.

Die Lenkungssteuerungseinrichtung 90 kann eine Fahrdynamikschnittstelle 94 aufweisen, über welche Messdaten eines Fahrdynamiksensors 95 in die Lenkungssteuerungseinrichtung 90 eingelesen werden können. Die Lenkungssteuerungseinrichtung 90 ist eingerichtet, die Aktoreinrichtung 80 basierend auf den eingelesenen Messdaten anzusteuern. Gemäß einer Ausführungsform weisen die Messdaten Informationen zu einer aktuellen Fahrtgeschwindigkeit des Zweirads 200 auf, wobei der Fahrdynamiksensor 95 die Geschwindigkeit an einer nicht gezeigten Antriebs- und/oder Abtriebskomponente des Zweirads 200 erfasst.

### Bezugszeichen

- 2: Zweiradrahmen
- 4: Gabelschaft
- 10: Lagerungseinrichtung
- 40: Kraftübertragungselement
- 60: Kopplungseinrichtung
- 70: Zweiradlenkungsmechanismus
- 80: Aktoreinrichtung
- 80': Aktorelement
- 82: Steuerungsschnittstelle
- 90: Lenkungssteuerungseinrichtung
- 92: Sensorschnittstelle
- 93: Lenkungssensor
- 94: Fahrdynamikschnittstelle
- 95: Fahrdynamiksensor
- 100: Vorrichtung
- 200: Zweirad

## Patentansprüche

1. Vorrichtung (100) zum Bereitstellen eines Lenkmoments, insbesondere eines Rückstellmoments, für einen Zweiradlenkungsmechanismus (70), mit
- einer Lagerungseinrichtung (10) zum Lagern der Vorrichtung (100) an einem Zweiradrahmen (2),
- einer Kopplungseinrichtung (60) zum Koppeln der Vorrichtung (100) mit dem Zweiradlenkungsmechanismus (70) und
- einer Aktoreinrichtung (80) zum Bewirken einer über die Kopplungseinrichtung (60) auf den Zweiradlenkungsmechanismus (70) übertragbaren Lenkkraft, insbesondere einer Rückstellkraft, wobei die Aktoreinrichtung (80) eine Steuerungsschnittstelle (82) zum Ansteuern der Aktoreinrichtung (80) durch eine Lenkungssteuerungseinrichtung (90) aufweist.

2. Vorrichtung (100) nach Anspruch 1,
wobei die Aktoreinrichtung (80) eingerichtet ist, um in einer Neutralstellung der Vorrichtung (100) Energie auf die Kopplungseinrichtung (60) zu übertragen, mit welcher in der Neutralstellung eine Stabilisierungskraft zum Stabilisieren des Zweiradlenkungsmechanismus (70) bewirkbar ist.

3. Vorrichtung (100) nach Anspruch 1 oder 2,
wobei die Aktoreinrichtung (80) eingerichtet ist, um über einen sich aus einer Neutralstellung der Vorrichtung (100) einstellenden Lenkwinkelverlauf Energie auf die Kopplungseinrichtung (60) zu übertragen, mit welcher über den sich einstellenden Lenkwinkelverlauf eine variable Lenkkraft bewirkbar ist.

4. Vorrichtung (100) nach einem der vorhergehenden Ansprüche, mit der Lenkungssteuerungseinrichtung (90), wobei die Lenkungssteuerungseinrichtung (90) eine Sensorschnittstelle (92) zum Einlesen von sensorisch erfasster Information zu einer Lenkungsgröße aufweist, wobei die Lenkungssteuerungseinrichtung (90) eingerichtet ist, um die Aktoreinrichtung (80) derart anzusteuern, dass die Lenkkraft in Abhängigkeit der eingelesenen Information bewirkt wird.

5. Vorrichtung (100) nach einem der vorhergehenden Ansprüche, mit der Lenkungssteuerungseinrichtung (90), wobei die Lenkungssteuerungseinrichtung (90) eine Fahrdynamikschnittstelle (94) zum Einlesen von Information zu einer Zweiradfahrdynamikgröße aufweist, wobei die Lenkungssteuerungseinrichtung (90) eingerichtet ist, um die Aktoreinrichtung (80) derart anzusteuern, dass die Lenkkraft in Abhängigkeit der eingelesenen Information bewirkt wird.

6. Vorrichtung (100) nach einem der vorhergehenden Ansprüche, mit der Lenkungssteuerungseinrichtung (90), wobei die Lenkungssteuerungseinrichtung (90) eingerichtet ist, um die Aktoreinrichtung (80) derart anzusteuern, dass ein über die Kopplungseinrichtung (60) auf den Zweiradlenkungsmechanismus (70) übertragbarer Lenkkraftverlauf bewirkt wird, welcher bei einem sich in einem vorbestimmten Lenkwinkelbereich einstellenden Lenkwinkelverlauf ein variables Lenkmoment, insbesondere ein variables Rückstellmoment, bereitstellt.

7. Vorrichtung (100) nach einem der vorhergehenden Ansprüche, mit der Lenkungssteuerungseinrichtung (90), wobei die Lenkungssteuerungseinrichtung (90) eingerichtet ist, um die Aktoreinrichtung (80) derart anzusteuern, dass ein über die Kopplungseinrichtung (60) auf den Zweiradlenkungsmechanismus (70) übertragbarer Lenkkraftverlauf bewirkt wird, welcher bei einem sich aus einer Neutralstellung der Vorrichtung (100) in einem vorbestimmten Lenkwinkelbereich einstellenden Lenkwinkelverlauf einen progressiven Aufbau des Lenkmoments bereitstellt.

8. Vorrichtung (100) nach einem der vorhergehenden Ansprüche,
der Lenkungssteuerungseinrichtung (90), wobei die Lenkungssteuerungseinrichtung (90) eingerichtet ist, um die Aktoreinrichtung (80) derart anzusteuern, dass ein über die Kopplungseinrichtung (60) auf den Zweiradlenkungsmechanismus (70) übertragbarer Lenkkraftverlauf bewirkt wird, welcher bei einem sich in einem vorbestimmten Lenkwinkelbereich einstellenden Lenkwinkelverlauf einen degressiven Aufbau des Lenkmoments bereitstellt.

9. Vorrichtung (100) nach Anspruch 7 und 8,
wobei ein sich aus der Neutralstellung in dem vorbestimmten Lenkwinkelbereich einstellender Lenkwinkel in dem Lenkwinkelverlauf des progressiven Aufbaus des Rückstellmoments kleiner ist als ein sich in dem vorbestimmten Lenkwinkelbereich einstellender Lenkwinkel in dem Lenkwinkelverlauf des degressiven Aufbaus des Rückstellmoments.

10. Vorrichtung (100) nach einem der vorhergehenden Ansprüche,
wobei die Aktoreinrichtung (80), insbesondere durch die Lenkungssteuerungseinrichtung (90) über die Steuerungsschnittstelle (82), einstellbar ist.

11. Vorrichtung (100) nach einem der vorhergehenden Ansprüche, mit der Lenkungssteuerungseinrichtung (90), wobei in der Lenkungssteuerungseinrichtung (90) ein auf dem Lenkwinkel basierendes Lenkkraftkennfeld hinterlegt ist, und wobei die Lenkungssteuerungseinrichtung (90) eingerichtet ist, um die Aktoreinrichtung (80) derart anzusteuern, dass die Lenkkraft basierend auf dem hinterlegten Lenkkraftkennfeld bewirkt wird.

12. Vorrichtung (100) nach einem der vorhergehenden Ansprüche,
wobei die Aktoreinrichtung (80) eine Energiespeichereinrichtung zum Speichern von Energie zum Bewirken der Lenkkraft aufweist.

13. Vorrichtung (100) nach Anspruch 12,
wobei die Energiespeichereinrichtung mit einem rekuperativen Zweiradsystem zum Einspeisen von Energie in die Energiespeichereinrichtung energetisch wirkverbunden ist.

14. Zweiradrahmen (2), an welchem die Vorrichtung (100) nach einem der vorhergehenden Ansprüche gelagert ist.

15. Zweiradlenkungsmechanismus (70), mit welchem eine Vorrichtung (100) nach einem der Ansprüche 1 bis 13 gekoppelt ist.

16. Zweirad (200),
welches einen Zweiradrahmen (2) nach Anspruch 14 oder einen Zweiradlenkungsmechanismus (70) nach Anspruch 15 aufweist.
